# EUROPÄISCHE PATENTSCHRIFT

(11) **EP 0 551 641 B1**
(45) Veröffentlichungstag und Bekanntmachung des Hinweises auf die Patenterteilung: **29.07.1998**
(21) Anmeldenummer: 92121771.7
(22) Anmeldetag: 22.12.1992
(51) Int. Cl.: C08G 59/14, C09D 5/44

(54) **Die Verwendung von einem Aminomethylen-Gruppen tragenden Epoxiharz in Elektrotauchlacken.**
Use of aminomethylene-group containing epoxy resins in electro-dipcoats.
Utilisation d'une résine époxyde renfermant des groupes aminométhylène dans les couches électro-phorétiques.

(30) Priorität: 17.01.1992 DE 4201054
(43) Veröffentlichungstag der Anmeldung: 21.07.1993
(73) Patentinhaber: BASF Coatings Aktiengesellschaft, 48165 Münster (DE)
(72) Erfinder: Huemke, Klaus, Dr., W-6701 Friedelsheim (DE); Lawrenz, Dirk, Dr., W-6701 Maxdorf (DE); Heimann, Ulrich, Dr., W-4400 Muenster (DE)
(74) Vertreter: Abel, Manfred

(56) Entgegenhaltungen:
- EP-A- 0 135 825
- EP-A- 0 351 612
- GB-A- 2 007 672

## Beschreibung

Die vorliegende Erfindung betrifft die Verwendung von neuen Epoxiharzen mit Urethangruppierungen, die pro Molekül durchschnittlich 0,5 bis 5 Gruppen der Formel I tragen, 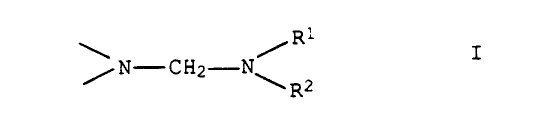 in der die Substitutenten R¹ und R² für C₁-C₈-Alkylgruppen, die auch zu fünf- oder sechsgliedrigen Ringen, welche ein Sauerstoffatom enthalten können, verknüpft sein können, oder die Phenylgruppe stehen, als Vernetzungskomponente für primäre und/oder sekundäre Aminogruppen tragende Harze in Elektrotauchlacken.

Außerdem betrifft die Erfindung Bindemittel für die Elektrotauchlackierung, die die neuen Epoxiharze enthalten, ein Verfahren zur Elektrotauchlackierung mit diesen Bindemitteln und damit überzogene Gegenstände.

Aus der EP-A 0 304 854 sind Bindemittel für die kathodische Elektrotauchlackierung bekannt, die als Vernetzerkomponente ein Gemisch aus blockierten Polyisocyanaten und/oder Harnstoffkondensationsprodukten und mindestens einer phenolischen Mannichbase enthalten. Zwar liegt die Einbrenntemperatur der Lackfilme mit ca. 120°C niedrig, aber aus solchen Bindemitteln angesetzte Elektrotauchbäder weisen nur ungenügende Lagerfähigkeit bei ca. 30°C auf.

Aufgabe der vorliegenden Erfindung war es, Vernetzer zu finden, die in Bindemitteln für die Elektrotauchlackierung neben möglichst tiefen Einbrenntemperaturen und guten Überzugseigenschaften eine lange Badbeständigkeit und Lagerfähigkeit zeigen.

Demgemäß wurden die eingangs definierten Epoxiharze gefunden, die zur Verwendung als Vernetzungskomponente für primäre und/oder sekundäre Aminogruppen tragende Harze in Elektrotauchlacken geeignet sind.

Man erhält die Epoxiharze, indem man von Hydroxylgruppen tragenden Harzen ausgeht.

Dabei handelt es sich um Harze, die aus einer mehrwertigen Hydroxylverbindung, vorzugsweise einer aromatischen Hydroxylverbindung, besonders bevorzugt einem mehrwertigen Phenol einerseits und einem Epihalohydrin, vorzugsweise Epichlorhydrin andererseits in einer solchen Weise aufgebaut sind, daß die mehrwertigen Hydroxylverbindungen endständig sind. Das Epihalohydrin kann teilweise oder völlig durch Epoxidendgruppen tragende Polyether, aufgebaut aus z. B. Ethylenoxid, Propylenoxid oder Tetrahydrofuran, ersetzt werden. Die Aufbaureaktionen zum Harz werden üblicherweise in Gegenwart eines Katalysators wie Triphenylphosphin durchgeführt. Geeignete mehrwertige Hydroxyverbindungen sind z. B.
4,4'-Dihydroxybenzophenon,
1,1-Bis-(4-hydroxyphenyl)-ethan,
1,1-Bis-(4-hydroxyphenyl)-isobutan,
2,2-Bis-(4-hydroxy-3-tert.-butylphenyl)-propan,
Bis-(4-hydroxynaphthyl)-methan,
1,5-Dihydroxynaphthalin
oder bevorzugt 2,2-Bis-(4-hyroxyphenyl)-propan (Bisphenol A).

Weiterhin sind als mehrwertige Hydroxylverbindungen Novolake zu nennen.

Bevorzugt werden die genannten Harze mit einem mittleren Molekulargewicht von 500 - 5000 eingesetzt.

Die beschriebenen, Hydroxylgruppen tragende Harze werden mit teilweise verkappten mehrwertigen Isocyanaten umgesetzt.

Als mehrwertige Isocyanate kommen aliphatische, alicyclische und/oder aromatische Isocyanate in Betracht, z. B. 4,4'-Diisocyanato-diphenyl-methan und dessen Stellungsisomere, 1,6-Di-isocyanatohexan, Di-isocyanatonaphthalin, trimeres Isophorondiisocyanat, trimeres Toluylendiisocyanat, trimeres 1,6-Diisocyanatohexan und bevorzugt Isophorondiisocyanat und/oder Toluylendiisocyanat.

Zum Verkappen eignen sich z. B. einwertige Alkohole, bevorzugt kurzkettige, aliphatische Alkohole wie Methanol, Ethanol, Propanol oder iso-Propanol, weiterhin sekundäre Amine, vorzugsweise kurzkettige aliphatische Amine wie Dimethyl-, Diethyl-, Dipropyl- oder Dibutylamin, oder Alkanolamine, bevorzugt tertiäre Alkanolamine wie Tri(n-propanol)amin oder Tri(iso-propanol)amin oder deren Mischungen.

Die mehrwertigen Isocyanate werden mit den Verkappungsverbindungen in solchen Mengen in an sich bekannter Weise umgesetzt, daß durchschnittlich eine Isocyanatgruppe pro Molekül nicht verkappt wird.

Die Hydroxylgruppen tragenden Harze werden mit den teilverkappten mehrwertigen Isocyanaten in solchen Mengen umgesetzt, daß mindestens möglichst alle aromatischen Hydroxylgruppen des Harzes abreagieren. Bei dieser Umsetzung empfiehlt es sich, eine Reaktionstemperatur von 90°C nicht zu überschreiten, um eine Aushärtung durch Vernetzungsreaktionen zu vermeiden.

Das so erhaltene Umsetzungsprodukt wird mit Formaldehyd oder bevorzugt einer Formaldehyd freisetzenden Verbindung wie Paraformaldehyd und einem sekundären Amin HNR¹R² zum Epoxiharz umgesetzt.

Im sekundären Amin sind die Reste R¹ und R² bevorzugt gleich. Besonders bevorzugt sind Dimethyl-, Diethyl-, Dipropyl- und Dibutylamin. Auch Morpholin ist als Aminokomponente geeignet.

Die Reaktion zum Epoxiharz kann bei Temperaturen von 40 bis 100°C, bevorzugt 70 bis 90°C durchgeführt werden. Vorzugsweise verwendet man hier ein Lösungsmittel mit, um die Viskosität des Reaktionsgemisches zu senken. Die Mengen liegen zwischen 1-50 Gew.-%, jedoch genügen manchmal auch geringe Mengen wie 1-5 Gew.-% bezogen auf den Gesamtansatz. Geeignet sind alle inerten Lösungsmittel, besonders solche mit einem Siedepunkt im Bereich von 100-250°C wie Toluol, Xylol, iso-Butanol, 1,2-Propylenglykolmonophenylether, Methylisobutylketon oder Mischungen hiervon. Das bei der Reaktion gebildete Wasser kann anschließend bei vermindertem Druck abdestilliert oder mit einem Azeotropbildner wie Toluol azeotrop aus dem Reaktionsgemisch entfernt werden.

Die Epoxiharze dienen als Vernetzungskomponente für primäre und/oder sekundäre Aminogruppen tragende Harze, die im folgenden als Grundharze bezeichnet werden. Solche Grundharze sind z. B. Harnstoff/Formaldehyd- oder Melamin/Formaldehyd-Harze, Homo- und Copolymere von Amiden ungesättigter Carbonsäuren sowie vor allem Aminogruppen enthaltende Epoxiharze. Als günstig haben sich Produkte erwiesen, die neben den Aminogruppen noch zur Vernetzung geeignete Hydroxylgruppen tragen.

Harnstoff-Formaldehyd-Grundharze sind solche mit einem mittleren Molekulargewicht von 200 bis 5000, wobei das Verhältnis von Harnstoff zu Formaldehyd von 0,1 : 1 bis 10 : 1 reicht.

Melamin-Formaldehyd-Grundharze haben geeigneterweise ein mittleres Molekulargewicht von 200 bis 5000. Das Verhältnis von Melamin zu Formaldehyd reicht von 0,1 : 1 bis zu 1 : 1.

Weiterhin sind Polymerisationsprodukte von Amiden ungesättigter Carbonsäuren wie Methacrylsäure und primären oder sekundären Aminen wie Diethylamin als Grundharz geeignet. Das mittlere Molekulargewicht sollte zwischen 500 und 5000 liegen. Als Copolymere können die genannten Polymerisationsprodukte z. B. Styrol, Acrylnitril oder Acrylester wie Hydroxyethylacrylat in Mengen von 1 bis 20 Gew.-% enthalten.

Aminogruppen enthaltende Epoxiharze sind als Grundharz besonders im Hinblick auf eine Anwendung als Bindemittel für die kathodische Elektrotauchlackierung geeignet. Bevorzugt sind solche mit einem mittleren Molekulargewicht von 500 bis 20000 und einer Aminzahl von 100 bis 150. Diese Amino-Epoxiharze weisen als Epoxiharzkomponente bevorzugt Glycidylether von Polyphenolen auf, die sich in bekannter Weise durch Veretherung mit einem Epihalohydrin herstellen lassen. Geeignete Polyphenole sind z. B. diejenigen, wie sie im Zusammenhang mit mehrwertigen Hydroxylverbindungen als Grundbaustein erfindungsgemäßer Epoxiharze genannt wurden.

Die Epoxikomponente kann auch ein mehrwertiger Glycidylether von aliphatischen mehrwertigen Alkoholen wie Ethandiol, Diethylenglykol, 1,2-Propandiol, 1,3-Propandiol, 1,5-Pentandiol, 1,2,6-Hexantriol oder Glycerin sein. Glycidylgruppen tragende Novolake sind ebenfalls als Epoxikomponente geeignet.

Bevorzugt sind Epoxikomponenten mit einem mittleren Molekulargewicht von 180 - 2500.

Sekundäre Aminfunktionen können in die Epoxiharze durch Reaktion einer Epoxigruppe mit primären Aminen eingebaut werden. Diese Amine können auch Hydroxylgruppen oder weitere Aminogruppen tragen. Sekundäre Alkanolamine wie Methylethanolamin sind bevorzugte Aufbaukomponenten.

Sehr geeignet zur Einführung der Aminkomponente in die Amino-Epoxiharze sind sogenannte Amidamine, d. h. Kondensationsprodukte aus Dicarbonsäuren, bevorzugt Dimerfettsäuren, und Polyaminen, bevorzugt aliphatischen Polyaminen, wie z. B. Diethylentriamin und/oder Triethylentetramin. Terminierende Monocarbonsäuren, bevorzugt C₁₂-C₂₀-Carbonsäuren, können mit in das Amidamin eingebaut werden. Besonders geeignet sind solche Produkte, deren Aminzahl zwischen 200 und 500 liegt.

Für den Aufbau der Amino-Epoxiharze hat es sich als vorteilhaft erwiesen, bei der Reaktion von Glycidylethern mit geeigneten Aminen langkettigte Alkylphenole, bevorzugt C₆-C₁₈-Alkylphenole, miteinzubauen, die für Verzweigungen im Harz sorgen.

Man nimmt die Umsetzung des Epoxiharzes mit der Aminkomponente vorzugsweise bei 50 - 90°C in einem polaren Lösungsmittel wie iso-Butanol oder sek.-Butanol vor, das in Mengen von 5 - 30 Gew.-% des Ansatzes vorhanden ist. Die Reaktion ist im allgemeinen nach 2 Stunden beendet.

Die erfindungsgemäßen Bindemittel sind durch teilweise oder vollständige Neutralisation in Wasser dispergierbar. Zur Neutralisation geeignete Säuren sind bevorzugt Carbonsäuren wie Ameisensäure, Essigsäure, Propionsäure oder Milchsäure, aber auch Mineralsäuren wie Phosphorsäuren. Die Neutralisation der Komponenten (A) und (B) kann gemeinsam, vorzugsweise aber getrennt erfolgen. Dazu wird der Einzelkomponente die Säure zugesetzt, in Wasser dispergiert und gegebenenfalls organisches Lösungsmittel entfernt. Die jeweiligen Einzeldispersionen können gemischt werden und mit Wasser auf einen gewünschten Feststoffgehalt verdünnt werden.

Zur Herstellung von Elektrotauchbädern können den erfindungsgemäßen Bindemitteln weitere Bindemittel, Pigmente, sowie in der Elektrotauchlackierung übliche Hilfs- und Zusatzstoffe wie Füllstoffe, Korrosionsinhibitoren, Dispergierhilfsmittel, Entschäumer und/oder Lösungsmittel zugesetzt werden.

Die Elektrotauchlackierung erfolgt in an sich bekannter Weise.

Bei Verwendung erfindungsgemäßer Bindemittel sind die Tauchbäder über mehrere Wochen bei 30°C stabil, obwohl andererseits nur eine Einbrenntemperatur von rund 120 - 130°C über 20 Minuten erforderlich ist. Unter diesen Bedingungen lassen sich 20 bis 25 µm dicke Lackfilme mit hohem Umgriff erzeugen. Die Lackfilme weisen auf phosphatiertem Blech sehr guten Korrosionsschutz auf, und sogar auf unbehandeltem Stahlblech wird darüber hinaus ein hervorragender Schutz erzielt. Daß beide Untergrundarten sehr gut geschützt werden, bringt in der Automobilfertigung dort Vorteile, wo bei Anwendung einer Spritzphosphatierung nicht alle Metallteile vor der Lackierung gleichmäßig vorbehandelt sind.

### Herstellungsbeispiele

### EEW: Epoxidäquivalentgewicht

### Beispiel 1

### Herstellung eines Epoxiharzes (A1)

1,50 kg eines Diglycidylethers auf Basis Bisphenol A und Epichlorhydrin (EEW 188) wurden mit 2,20 kg Bisphenol A (6,47 mol) und 1,25 g Triphenylphosphin 2 h auf 150 - 160°C erhitzt, in 2 kg Methylisobutylketon gelöst und innerhalb von 90 min bei 60 bis 90°C mit einer Lösung eines zur Hälfte verkappten Toluylendiisocyanat-Gemisches versetzt.

Das teilverkappte Toluylendiisocyanat wurde durch Umsetzung eines technischen Gemisches aus 1,95 kg 2,4-Diisocyanatotoluol (11,2 mol) und 490 g 2,6-Diisocyanatotoluol (2,8 mol) mit einer Mischung aus 720 g Dimethylaminopropanol (9,1 mol) und 320 g Ethanol (7 mol) bei 50°C in 900 g Toluol hergestellt.

Die Lösung des Umsetzungsproduktes wurde mit 1,55 kg Dibutylamin (12 mol) und 360 g Paraformaldehyd (12 mol CH₂O) versetzt, 6 h auf 90-95°C gehalten und anschließend vom Reaktionswasser befreit.

Der Feststoffghalt der Lösung betrug 80 % und die Aminzahl des Harzes hatte einen Wert von 120 mg/g.

### Beispiel 2

### Herstellung eines Epoxiharzes (A2)

940 g eines Diglycidylethers auf Basis Bisphenol A und Epichlorhydrin (EEW 188) wurden mit 1,70 kg Bisphenol A (5,00 mol) und 1,20 g Triphenylphosphin 2 h auf 150 - 160°C erhitzt, in 700 g Toluol gelöst und innerhalb von 60 min bei 50 bis 70°C mit einer Lösung eines zur Hälfte verkappten Toluylendiisocyanat-Gemisches versetzt.

Das teilverkappte Toluylendiisocyanat wurde durch Umsetzung eines technischen Gemisches von 1,05 kg 2,4-Diisocyanatotoluol (6 mol) und 260 g 2,6-Diisocyanatotoluol (1,5 mol) mit 1,03 kg Dibutylamin (8 mol) bei 50°C in 600 g Toluol hergestellt.

Die Lösung des Umsetzungsproduktes wurde mit 1,16 kg Dibutylamin (9 mol) und 270 g Paraformaldehyd (9 mol CH₂O) sowie 300 g Isobutanol versetzt, 4 h auf 80CC gehalten und anschließend vom Reaktionswasser befreit. Der Feststoffgehalt der Lösung betrug 80 % und die Aminzahl des Harzes hatte einen Wert von 59 mg/g.

### Anwendungsbeispiele

1. Herstellung von Elektrotauchbad-Dispersionen
a) Herstellung von wäßrigen Dispersionen aus den Harzen A1 und A2
Das jeweilige Harz wurde mit Essigsäure versetzt, auf 50°C erhitzt und in 460 g Wasser dispergiert. Unter Zulauf von 225 g Wasser wurden 225 g eines Lösungsmittel/Wasser-Gemisches abdestilliert.
Die Dispersionen hatten einen Feststoffgehalt von 35 % und waren feinteilig und stabil.

| | A1 | A2 |
|---|---|---|
| Harz [g] | 400 | 400 |
| Essigsäure [g] | 11,6 | 17,3 |

b) Herstellung von Dispersionen von Grundharzen G1 und G2
b₁) Herstellung des Grundharzes G1
11,3 kg eines Diglycidylethers auf Basis Bisphenol A und Epichlorhydrin (EEW 188) wurden mit 3,08 kg Bisphenol A (9,06 mol) und 4,30 g Triphenylphosphin in 750 g 1,2-Propylenglykolmonophenylether auf 130°C erhitzt, bis ein EEW von 435 erreicht war, in 5 kg Isobutanol und 500 g Butylglykol gelöst und bei 50-55°C mit 1,01 kg Methylethanolamin (13,5 mol) versetzt. Als ein EEW von 750 erreicht war, wurden 1,5 kg Isobutanol, 170 g Butylglykol und 4,40 kg einer Lösung eines Amidamines zugesetzt und 2 h bei 55°C gehalten.
Das Amidamin wurde durch Umsetzung von 5,15 kg Diethylentriamin (50 mol), 7,25 kg Dimerfettsäure (13,0 mol) und 1,40 kg Leinölfettsäure (5,0 mol) in 1,5 kg Xylol bei 150-175°C unter Abdestillieren des Reaktionswassers hergestellt (Aminzahl 464 mg/g).
Das Grundharz G1 hatte einen Feststoffgehalt von 70 % und eine Aminzahl von 145 mg/g.
b₂) Herstellung des Grundharzes G2
8,27 kg eines Diglycidylethers auf Basis Bisphenol A und Epichlorhydrin (EEW 188) wurden mit 2,28 kg Bisphenol A (6,70 mol) und 3,20 g Triphenylphosphin in 550 g 1,2-Propylenglykolmonophenylether auf 130°C erhitzt, bis ein EEW von 435 erreicht war, in 3,2 kg Isobutanol und 360 g Butylglykol gelöst und bei 50-55°C mit 750 g Methylethanolamin (10 mol) versetzt. Als ein EEW von 745 erreicht war, wurden 1 kg Isobutanol, 100 g Butylglykol und 2,60 kg einer Lösung eines Amidamins zugesetzt und 2 h bei 55°C gehalten. Das Grundharz hatte einen Feststoffgehalt von 70 % und eine Aminzahl von 147 mg/g.
Das Amidamin wurde durch Umsetzung von 5,29 kg Triethylentetramin (36,2 mol), 4, 93 kg Dimerfettsäure (8,8 mol) und 950 g Leinölfettsäure (3,4 mol) in 1,1 kg Xylol bei 150 - 175°C unter Abdestillieren des Reaktionswassers hergestellt (Aminzahl 556 mg/g).
b₃) Herstellung von Dispersionen aus den Grundharzen G1 und G2
Verfahren wie la), aber Dispergieren in 1,2 kg Wasser, Zulauf von weiteren 1,2 kg Wasser und Abdestillieren von 1,2 kg Lösungsmittel/Wasser-Gemisch. Die Dispersionen waren feinteilig und stabil.

| | G1 | G2 |
|---|---|---|
| Harz [g] | 1200 | 1200 |
| Essigsäure [g] | 23,5 | 18,3 |

c) Herstellung einer Pigmentpaste P
640 g eines Diglycidylethers auf Basis Bisphenol A und Epichlorhydrin (EEW 485) und 160 g eines zweiten Diglycidylethers auf gleicher Basis (EEW 188) wurden bei 100°C zu 465 g Hexamethylendiamin (4 mol) gegeben. Überschüssiges Diamin wurde anschließend bei 200°C und 30 mbar abgezogen.
Zum Reaktionsprodukt wurden 58 g Stearinsäure (0,20 mol), 175 g Dimerfettsäure (0,31 mol) und 115 g Xylol gegeben. Das Reaktionswasser wurde bei 175-180°C azeotrop abdestilliert und das Produkt mit 60 Butylglykol sowie 300 g Isobutanol verdünnt.
110 g dieser Lösung wurden in einer Kugelmühle mit 36 g Ethylenglykolmonobutylether, 3 g Essigsäure, 170 g Titandioxid, 18 g Bleisilikat, 4,5 g Ruß und 170 g Wasser zu einer Kornfeinheit von <7 µm vermahlen.
2. Elektrotauchlackierung
Für die kathodische Elektrotauchbadlackierung wurden Dispersionen eines Harzes, eines Grundharzes und die Pigmentpaste gemischt und mit Wasser auf einen Feststoffgehalt von 20 Gew.-% eingestellt. 15 g 1,2-Propylenglykolmonophenylether wurden zugesetzt. Man ließ das Bad eine Woche altern. Die Abscheidung erfolgte bei 27°C. Weitere Einzelheiten sind der Tabelle zu entnehmen.
3. Korrosionsschutztests
Für die Korrosionsschutztests wurden Probebleche mit einer Schichtdicke von 23 µm beschichtet.
- Klimawechseltest KWT (nach DIN 50 021)
Die phosphatierten Prüfbleche werden folgender Wechselbelastung ausgesetzt:

| | |
|---|---|
| 1. Tag | 24 h Raumbelüftung, Raumtemperatur |
| 2. Tag | 24 h Salzsprühbelastung, 35°C |
| 3.-6. Tag | 8 h Kondenswasserklima, 40°C |
| | 20 h Kondenswasserklima, Raumtemperatur |
| 7. Tag | 24 h Raumbelüftung, Raumtemperatur |
| Dauer | 10 Zyklen = 1680 Stunden |

- SCAB-Test (nach General Motors TM 54-26)
Die phosphatierten Prüfbleche werden folgender Wechselbelastung ausgesetzt:

| | |
|---|---|
| 1. Tag | 1 h 60°C |
| | 0,5 h -23°C |
| | 0,25 h in 5 %iger, wäßriger NaCl-Lösung |
| | 1,25 h Ablüften |
| | 21 h 60°C bei 85 % relativer Feuchte |
| 2.-5. Tag | 0,25 h in 5 %iger, wäßriger NaCl-Lösung |
| | 1,25 h Ablüften |
| | 22,5 h 60°C bei 85 % relativer Feuchte |
| 6.-7. Tag | 24 h 60°C bei 85 % relativer Feuchte |
| | |
| Dauer | 4 Zyklen = 672 Stunden |

- Salzsprühtest SST (nach DIN 50017)
Die unbehandelten Bleche werden bei 35°C einer 5 %igen Salzlösung ausgesetzt, die in einer Sprühkammer als feiner Nebel aufgebracht wird.
Dauer: 480 Stunden

Nach allen Tests wird die Unterwanderung am Ritz in mm (nach DIN 50 017) gemessen.

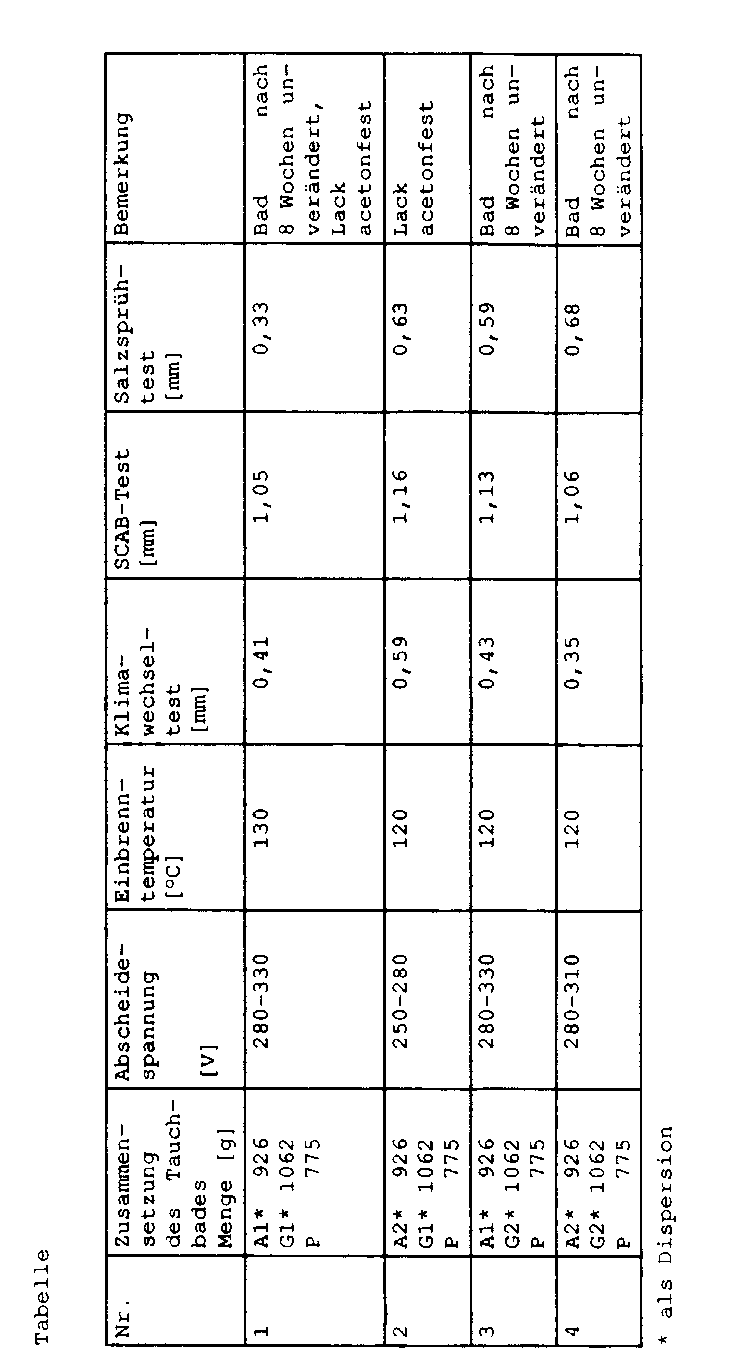

## Patentansprüche

1. Verwendung von Epoxiharzen,
enthaltend pro Molekül durchschnittlich 0,5 bis 5 Gruppen der Formel I 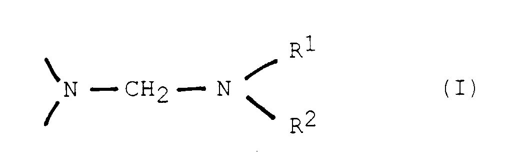 in der die Substituenten R¹ und R² für C₁ - C₈-Alkylgruppen, die auch zu fünf- oder sechsgliedrigen Ringe, welche ein Sauerstoffatom enthalten können, verknüpft sein können, oder die Phenylgruppe stehen,
als Vernetzungskomponente für primäre und/oder sekundäre Aminogruppen tragende Harze in Elektrotauchlacken.

2. Für die kathodische Elektrotauchlackierung geeignetes vernetzbares Bindemittel bestehend aus
A) 5 bis 50 Gew.-% eines Epoxiharzes, enthaltend pro Molekül durchschnittlich 0,5 bis 5 Gruppen der Formel I 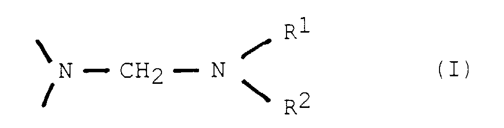 in der die Substituenten R¹ und R² für C₁ - C₈-Alkylgruppen, die auch zu fünf- oder sechsgliedrigen Ringen, welche ein Sauerstoffatom enthalten können, verknüpft sein können, oder die Phenylgruppe stehen und
B) 50 bis 95 Gew.-% eines primäre und/oder sekundäre Aminogruppen tragenden Polymeren mit einem mittleren Molekulargewicht von 500 bis 20.000, dessen Aminzahl 100 bis 150 beträgt.

3. Verfahren zur Elektrotauchlackierung,
dadurch gekennzeichnet, daß man hierzu Bindemittel gemäß Anspruch 2 in an sich bekannter Weise verwendet.

4. Mit einem Überzug versehene Gegenstände erhältlich unter Verwendung eines Bindemittels gemäß Anspruch 2.

## Claims

1. The use of epoxy resins containing on average per molecule from 0.5 to 5 groups of the formula I 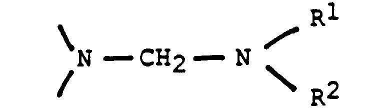 where the substituents R¹ and R² are C₁-C₈-alkyl groups, which may also be linked together to form five- or six-membered rings, which may contain an oxygen atom, or are each phenyl, as crosslinking components for electrocoating resins with primary and/or secondary amino groups.

2. A crosslinkable binder suitable for cathodic electrocoating, comprising
A) from 5 to 50% by weight of an epoxy resin containing on average per molecule from 0.5 to 5 groups of the formula I 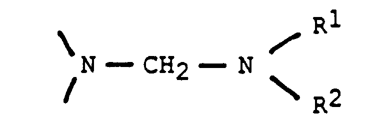 where the substituents R¹ and R² are C₁-C₈-alkyl groups, which may also be linked together to form five- or six-membered rings, which may contain an oxygen atom, or are each phenyl, and
B) from 50 to 95% by weight of a polymer with primary and/or secondary amino groups that has an average molecular weight of from 500 to 20,000 and whose amine number is from 100 to 150.

3. An electrocoating process, which comprises using in a conventional manner binders as claimed in claim 2.

4. Coated articles obtainable using a binder as claimed in claim 2.

## Revendications

1. Utilisation de résines époxydes, contenant par molécule en moyenne 0,5 à 5 groupes de formule I : 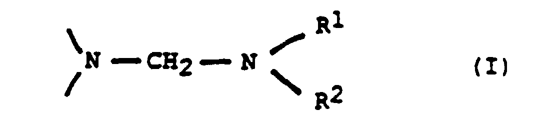 dans laquelle les substituants R¹ et R² sont des groupes alkyle en C₁-C₈, qui peuvent être combinés pour former des noyaux à cinq ou six chaînons, qui peuvent contenir un atome d'oxygène, ou le groupe phényle,
comme composants de réticulation pour des résines portant des groupes amino primaires et/ou secondaires dans des vernis au trempé électrolytiques.

2. Agent liant réticulable convenant au vernissage électrolytique cathodique au trempé et constitué de :
A) 5 à 50% en poids d'une résine époxyde contenant par molécule en moyenne 0,5 à 5 groupes de formule I : 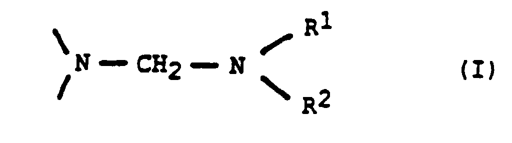 dans laquelle les substituants R₁ et R₂ sont des groupes alkyle en C₁-C₈, qui peuvent être combinés également pour former des noyaux à cinq ou six chaînons, qui peuvent contenir un atome d'oxygène, ou le groupe phényle, et
B) 50 à 95% en poids d'un polymère portant des groupes amino primaires et/ou secondaires avec un poids moléculaire moyen de 500 à 20 000, dont l'indice d'amine est de 100 à 150.

3. Procédé de vernissage électrolytique au trempé, caractérisé en ce qu'on utilise à cet effet des agents liants selon la revendication 2 de manière connue en soi.

4. Objets recouverts d'un revêtement qui peuvent être obtenus en utilisant un agent liant selon la revendication 2.
